# FASCICULE DE BREVET EUROPEEN

(11) **EP 4 370 818 B1**
(45) Date de publication et mention de la délivrance du brevet: **21.01.2026**
(21) Numéro de dépôt: 22741317.6
(22) Date de dépôt: 13.07.2022
(51) Int. Cl.: F16L 3/08, B60K 15/03, F16L 3/24, F16L 3/13, B60K 15/00, B60K 15/035

(54) **DISPOSITIF DE FIXATION D'UN ÉLÉMENT SUR UNE PARTIE D'UN VÉHICULE AUTOMOBILE**
VORRICHTUNG ZUR BEFESTIGUNG EINES ELEMENTS AN EINEM TEIL EINES KRAFTFAHRZEUGS
DEVICE FOR ATTACHING AN ELEMENT TO A PART OF A MOTOR VEHICLE

(30) Priorité: 15.07.2021 LU 102844
(43) Date de publication de la demande: 22.05.2024
(73) Titulaire: OPmobility C-Power Belgium Research, 1200 Woluwe-Saint-Lambert (BE)
(72) Inventeur: BOUTIER, Julien, 1130 BRUXELLES (BE); BAHRAMIAN, Kourosh, 1130 BRUXELLES (BE); PATTE, Eric, 1130 Bruxelles, Belgique 1130 BRUXELLES (BE)
(74) Mandataire: LLR
(86) Numéro de dépôt international: PCT/EP2022/069560
(87) Numéro de publication internationale: WO 2023/285512

(56) Documents cités:
- EP-B1- 3 565 729
- DE-B3- 102019 128 912
- FR-A1- 2 942 289
- FR-A1- 3 052 605
- US-A1- 2021 071 784

## Description

L'invention concerne un dispositif de fixation d'un élément sur une partie d'un véhicule automobile, un système de fixation comprenant le dispositif de fixation et la partie de véhicule automobile, une partie de véhicule automobile comprenant le système de fixation, et un procédé d'installation de l'élément dans un véhicule automobile. La partie de véhicule automobile est notamment une surface interne ou externe d'un réservoir automobile, un composant du réservoir destiné à être monté sur une desdites surfaces, ou un châssis ou cadre comprenant une pluralité de réservoirs à hydrogène. Le réservoir est un réservoir d'un fluide de fonctionnement du véhicule, c'est-à-dire par exemple un carburant, une solution d'urée, de l'eau, du liquide de frein, du liquide lave-glace, ... L'invention concerne par exemple la fixation d'une ligne d'admission de carburant sur un réservoir de carburant. L'élément peut également être une autre canalisation, par exemple une canalisation de ventilation. Mais il peut être tout autre élément qui nécessiterait d'être fixé au voisinage du réservoir, comme par exemple un bouclier thermique pour le réservoir, un faisceau électrique, un câble de frein, une ligne de refroidissement d'un système de refroidissement, un système de pré-maintien tel qu'une sangle pour une utilisation lors d'opérations sur le véhicule.

On connaît déjà dans l'état de la technique, notamment d'après le document FR2942289, une agrafe de fixation d'une canalisation d'un circuit de freinage sur un réservoir de carburant. Le système de fixation décrit dans ce document nécessite l'installation sur le réservoir d'un dispositif dédié à la fixation, à savoir un support. Le support est par exemple soudé sur l'enveloppe du réservoir. Un tel système nécessite donc la fabrication d'un support dédié et son installation sur le réservoir. Il implique de disposer sur le réservoir d'une zone suffisamment grande et accessible pour y souder ou y coller un composant supplémentaire. Cependant on ne dispose pas nécessairement, sur une surface interne ou externe du réservoir, d'une telle zone permettant la fixation d'un composant supplémentaire.

On connaît également du document FR2824615 une patte de fixation de tuyau pour un véhicule automobile. La patte de fixation est encliquetable dans un trou de tôle de carrosserie automobile. La patte comprend également des berceaux de maintien du tuyau.

On connaît également du document FR3052605 un collier de maintien d'un faisceau électrique autour d'un organe situé au voisinage d'un moteur d'un véhicule automobile. Le collier de serrage comprend une portion de serrage du collier autour d'une zone cylindrique de l'organe. La portion de serrage est liée à une portion de maintien du faisceau. Pour monter le faisceau, on clipse la portion de serrage sur la zone cylindrique et on fait une translation de la portion de maintien pour faire coopérer un moyen d'indexage de la portion de maintien avec un moyen d'indexage complémentaire d'un organe de freinage. Pour fixer le faisceau électrique, le collier de serrage nécessite donc la présence, dans un organe au voisinage du moteur électrique, d'une zone dédiée participant à la mise en place du faisceau au voisinage du moteur, à savoir un moyen d'indexage.

L'invention a notamment pour but de proposer un système de fixation ne nécessitant pas l'utilisation d'une zone dédiée d'une surface du réservoir, ou plus généralement une zone dédiée d'une surface du véhicule automobile.

A cet effet, l'invention a pour objet un dispositif de fixation d'un élément sur un support formé par une partie d'un véhicule automobile, préférentiellement par une surface interne ou externe d'un réservoir automobile, et/ou par un composant du réservoir destiné à être monté sur une desdites surfaces, ou un châssis ou cadre comprenant une pluralité de réservoirs à hydrogène, comprenant :
- des moyens de maintien dudit élément, et
- un corps apte à être fixé sur le support, le corps étant solidaire des moyens de maintien, dans lequel :
- le corps comprend une première et une seconde partie solidaires et adjacentes entre elles, et déformables élastiquement,
- les deux parties présentent chacune une surface intérieure concave,
- les deux parties s'étendent dans des plans différents, transversaux l'un par rapport à l'autre,
de sorte que la première partie est apte à être positionnée sur une première zone du support dans une direction d'engagement située dans le plan de la première partie, et à enserrer partiellement la première zone, et le positionnement de la première partie sur la première zone du support permet de positionner la seconde partie par rapport à une seconde zone du support, la seconde partie étant apte à se déformer dans le plan de la seconde partie de manière à se conformer à la forme de la seconde zone du support. La seconde partie comprend en outre, à son extrémité opposée à son extrémité adjacente à la première partie, un deuxième moyen de verrouillage complémentaire d'un moyen de verrouillage de la seconde zone, pour verrouiller la seconde partie dans sa position positionnée sur la seconde zone, et le deuxième moyen de verrouillage est un crochet capable de se fixer sur une nervure présente sur la seconde zone.

Il est par exemple possible de tirer profit de la présence sur le composant servant de support, d'une nervure, dont la fonction est de servir de repère pour son installation (sa soudure). On utilise par exemple de telles nervures de repérage sur une valve de purge à limite de remplissage (FLVV, « fill limiting vent valve »), ou une valve combinée (CFLVV), ou bien sur une pipette de dégazage, composants qui équipent habituellement un réservoir de carburant. Sur des supports cylindriques comme ces composants, la mise en jeu du deuxième moyen de verrouillage permet de raccourcir la longueur de la seconde partie. En effet sur un support cylindrique, grâce au deuxième moyen de verrouillage, il suffit d'étendre la seconde partie sur environ la moitié de la circonférence du composant, pour verrouiller le positionnement. Alternativement, la deuxième partie peut être clippée sur la circonférence du composant, préférentiellement sur au plus trois quarts de la circonférence du composant.

De préférence, la première partie est apte à être clippée sur la première zone. De préférence, la seconde partie est apte à être clippée sur la seconde zone.

Selon l'invention, une surface concave est une surface creuse, en opposition avec une surface convexe, qui fait saillie.

Les surfaces intérieures concaves ont par exemple la forme d'un arc de cercle. La surface intérieure concave de la première partie peut avoir une forme en U.

Dans l'invention, le terme « clipper » signifie fixer à l'aide d'une pince formant ressort.

On considère que la première partie enserre partiellement la première zone, lorsqu'elle recouvre au moins 50 % de la première zone.

On entend par « plan d'une partie » le plan médian d'une partie.

On propose ainsi de monter l'élément en positionnant chaque partie du corps sur deux zones distinctes du support, chaque partie du corps étant engagée avec une zone du support, dans une direction d'engagement différente. On comprend ainsi que la seconde partie est installée par extension de celle-ci selon une direction dans un plan transversal à celui dans lequel la direction d'engagement de la première partie est située. Il faut comprendre que « transversal » ne signifie pas nécessairement orthogonal ou perpendiculaire qui constitue un mode de réalisation préféré. On utilise ainsi une forme existante, par exemple à l'intérieur ou à l'extérieur du réservoir, consistant en une forme accessible d'une surface du réservoir et / ou d'un composant du réservoir, pour installer un élément.

L'invention est facilement utilisable, avant ou après soudure de composants du réservoir et ne nécessite pas la présence, sur ou à l'intérieur du réservoir, d'une zone suffisamment grande et accessible pour y souder ou y coller un composant supplémentaire. Elle permet une installation rapide et peu coûteuse de l'élément, évitant des étapes de soudage, collage ou vissage, ne nécessitant pas d'outillage particulier. Elle garantit également que le composant est bien positionné. Par ailleurs, le corps et les moyens de maintien sont ainsi fixés de façon amovible. Ils peuvent être facilement enlevés. On peut par exemple facilement les désolidariser du support avant recyclage, ce qui présente un intérêt pour le tri des matériaux.

De façon préférée, les moyens de maintien de l'élément peuvent être un clip, un chevillage, une vis d'assemblage, une goupille, un collier de serrage, une agrafe, un sertissage, un rivet, un trou de réception d'un moyen de fixation.

De façon avantageuse, le plan de la première partie est transversal, de façon optionnelle orthogonal, à la surface intérieure concave de la première partie. De façon également avantageuse, le plan de la seconde partie est transversal, de façon optionnelle orthogonal, à la surface intérieure concave de la seconde partie. Un plan orthogonal à une surface intérieure concave est un plan défini par deux droites sécantes, telles que chaque droite sécante est perpendiculaire à la surface intérieure concave.

Suivant d'autres caractéristiques optionnelles du dispositif de fixation, prises seules ou en combinaison :
- La première partie est équipée de premières nervures de rigidification, de préférences situées dans des plans parallèles au plan défini par la première partie.
- La seconde partie comprend en outre, à son extrémité opposée à son extrémité adjacente à la première partie, un moyen de calage apte à caler la seconde partie du corps contre la seconde zone. Le moyen de calage est par exemple un ergot faisant saillie de la seconde partie.
- Les moyens de maintien de l'élément s'étendent à partir d'une portion de la seconde partie, de façon à être déportés par rapport au support. Ceci permet d'accueillir l'élément dans un espace suffisant, à distance du support.
- La portion de la seconde partie à partir de laquelle s'étendent les moyens de maintien comprend des secondes nervures de rigidification. Ceci permet de renforcer cette portion du dispositif de fixation, soumise aux tensions en lien avec la déformation de la seconde partie, et en lien avec sa fonction de support des moyens de maintien et de l'élément.
- La section des secondes nervures de rigidification présente, du côté destiné à être positionné sur la seconde zone, un angle destiné à épouser une forme de la surface de la seconde zone. Ceci permet d'adapter ces nervures à certaines formes particulières, par exemple des valves de purge et des pipettes de dégazage. En effet, les inventeurs ont envisagé d'utiliser le dispositif de fixation sur un support cylindrique, qui comprend une collerette formant un angle à 135° avec la surface cylindrique. Pour se conformer à cette forme particulière, il est proposé que les secondes nervures de rigidification portant les moyens de fixation comprennent une partie complémentaire, présentant un angle de 45°.

De façon avantageuse, le moyen de calage de la seconde partie présente également un angle destiné à épouser une forme de la seconde zone.
- La première partie comprend en outre, à son extrémité opposée à son extrémité adjacente à la seconde partie, un premier moyen apte à verrouiller la première partie dans sa position positionnée sur la première zone, de préférence clippée. Avantageusement, le premier moyen de verrouillage est une dent destinée à être placée sous une surface du support, de manière à empêcher le retrait involontaire de la première partie. Du fait de l'angle formé par la collerette et les secondes nervures de rigidification, une force exercée dans la direction d'engagement / retrait de la première partie, pourrait aboutir à l'ouverture du dispositif de fixation (par retrait de la première partie). Une telle force pourrait être appliquée par exemple en cas de forte décélération du véhicule ou pendant le passage d'un dos d'âne. Le premier moyen de verrouillage empêche l'ouverture du dispositif de fixation dans ces conditions.
- Les première et seconde parties, et les moyens de maintien de l'élément, sont à base du même matériau. Ceci permet d'obtenir un dispositif de fixation dans lequel la solidarité entre les deux parties est améliorée, et les moyens de maintien de l'élément sont stablement associés aux deux parties du dispositif de fixation, facilitant ainsi le maintien en place de l'élément.

De façon avantageuse, le dispositif de fixation est fabriqué par injection d'un unique polymère tel que le POM (polyoxyméthylène), du polyamide, du polyéthylène, ou par mise en forme, par exemple par moulage ou pliage, d'un métal sous forme pure ou alliée.
- Les moyens de maintien de l'élément comprennent, sur un côté opposé à un côté destiné à interagir avec l'élément, au moins une nervure de contre-appui. La nervure de contre-appui permet, lors de l'assemblage des moyens de maintien avec l'élément, de chercher un contre-appui contre le support.
- Le dispositif de fixation est apte à être fixé sur un support formé par une surface interne ou externe d'un réservoir automobile, et/ou un composant du réservoir destiné à être monté sur une desdites surfaces, ou un châssis ou cadre comprenant une pluralité de réservoirs à hydrogène.

L'invention a également pour objet un système de fixation d'un élément à un véhicule automobile. Le système de fixation comprend :
- un support formé par une partie du véhicule automobile, préférentiellement par une surface interne ou externe d'un réservoir automobile, et/ou par un composant du réservoir destiné à être monté sur une desdites surfaces, ou un châssis ou cadre comprenant une pluralité de réservoirs à hydrogène,
- un dispositif de fixation tel que décrit ci-avant.

Le composant est par exemple une valve équipant un réservoir, ou un capteur, tel qu'une pipette de dégazage, ou tout autre composant qui, une fois monté sur ou à l'intérieur d'un réservoir, procure une première et / ou une seconde zone pouvant convenir à l'installation du dispositif selon l'invention. De même, toute surface du réservoir présentant les mêmes caractéristiques peut être utilisée comme support. Il peut s'agir par exemple d'une zone d'une paroi intérieure ou extérieure du réservoir présentant une structure apte à recevoir le corps, voire du plan de joint des coquilles du réservoir. Les première et seconde zones peuvent être toute surface pouvant être enserrée respectivement dans la surface intérieure concave de la première partie, et dans la surface intérieure concave de la seconde partie, c'est-à-dire des surfaces convexes.

Les surfaces des première et seconde zones ont la forme d'un arc de cercle ou sont constituées d'au moins trois segments consécutifs, dont les extrémités des au moins trois segments sont inscrites dans un arc de cercle.

Suivant d'autres caractéristiques optionnelles du système de fixation, prises seules ou en combinaison :
- La partie de véhicule automobile est une surface interne ou externe d'un réservoir automobile, et/ou un composant du réservoir destiné à être monté sur une desdites surfaces, ou un châssis ou cadre comprenant une pluralité de réservoirs à hydrogène.
- Le support est une valve de purge à limite de remplissage (FLVV, « fill limiting vent valve »), ou une valve combinée (CFLVV), ou bien une pipette de dégazage. Ces composants sont particulièrement intéressants car ils équipent habituellement les réservoirs de carburant et présentent deux zones particulièrement adaptées pour la mise en place du système de fixation. Ils présentent en effet une surface cylindrique qui peut convenir pour le positionnement de la seconde partie. Ces composants comprennent également une arrivée de canalisation, par exemple une canalisation pour la purge de la valve, qui permet de servir de support à la première partie. Par ailleurs, ces composants comprennent une nervure de repérage. Il est avantageux d'utiliser cette nervure, située à moins d'un demi-tour de circonférence du début de la zone de support de la seconde partie, comme troisième moyen de verrouillage, sur lequel le deuxième moyen de verrouillage peut se fixer.

L'invention a aussi pour objet une partie d'un véhicule automobile, sur ou à l'intérieur de laquelle un élément est fixé par un système de fixation tel que décrit ci-avant. La partie de véhicule automobile peut être une surface interne ou externe d'un réservoir automobile, et/ou un composant du réservoir destiné à être monté sur une desdites surfaces, ou un châssis ou cadre comprenant une pluralité de réservoirs à hydrogène.

L'invention a encore pour objet un procédé d'installation d'un élément dans un véhicule automobile, l'installation étant effectuée au moyen d'un système de fixation tel que décrit ci-avant, comprenant les étapes suivantes :
- avant ou après le montage du corps sur le support du système de fixation, on assemble l'élément avec les moyens de maintien,
- on positionne la première partie du corps sur une première zone du support, selon une direction d'engagement de la première partie, et on enserre partiellement la première zone par la première partie, préférentiellement on clippe,
- on positionne la seconde partie du corps sur la seconde zone du support, par extension de la seconde partie selon une direction dans un plan transversal à celui dans lequel la direction d'engagement de la première partie est située, préférentiellement on clippe.

De façon préférentielle, l'étape de positionnement de la première partie du corps précède l'étape de positionnement de la seconde partie du corps sur la seconde zone du support.

### Brève description des figures

L'invention sera mieux comprise à la lecture de la description qui va suivre donnée uniquement à titre d'exemple et faite en se référant aux dessins annexés dans lesquels :
[Fig. 1] les figures 1a et 1b sont des vues de dessus d'un dispositif de fixation selon un mode de réalisation de l'invention, illustrant des étapes de l'installation d'un élément sur une partie d'un véhicule automobile ;
[Fig. 2] la figure 2 est une vue de côté du dispositif de fixation des figures 1a et 1b fixé sur une partie d'un véhicule automobile ;
[Fig. 3] la figure 3 est une vue en perspective d'une partie du dispositif de fixation fixé sur la partie de véhicule automobile des figures 1a et 1b ;
[Fig. 4] les figure 4a, 4b et 4c sont des vues en perspective du dispositif de fixation des figures 1a et 1b, illustrant des étapes de l'installation d'un élément sur une partie d'un véhicule automobile.

### Description détaillée

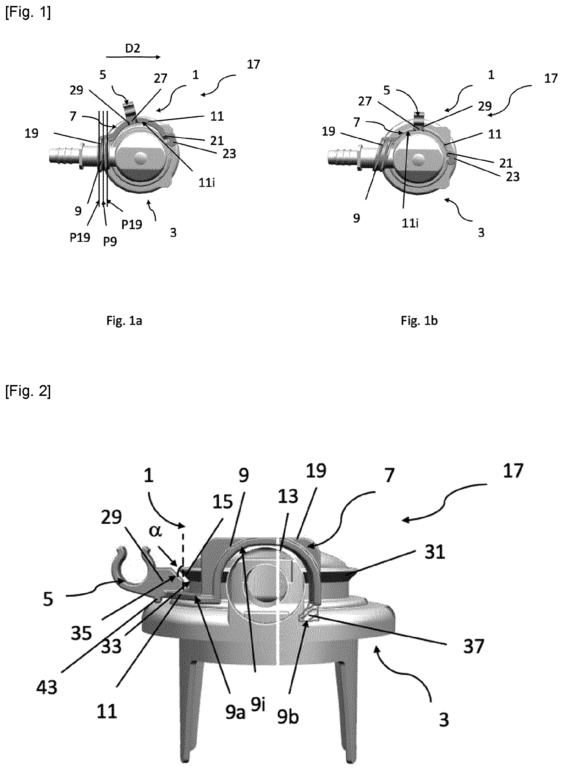

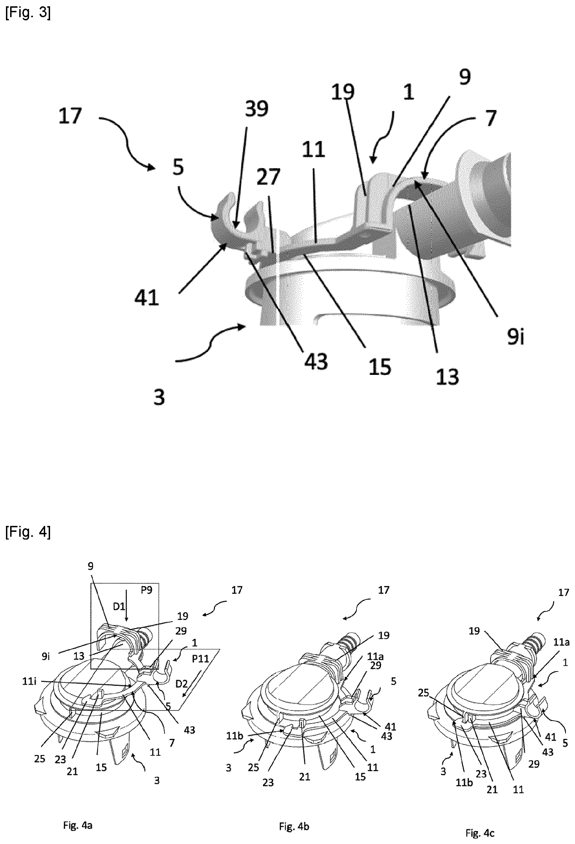

On a représenté sur les figures 1 à 4 un dispositif de fixation selon un mode de réalisation de l'invention, désigné par la référence générale 1. Le dispositif 1 est un dispositif de fixation d'un élément (non représenté) sur un support 3. Le support 3 est formé par une partie d'un véhicule automobile. Dans l'exemple représenté, le support 3 est un composant d'un réservoir automobile, plus précisément d'un réservoir de carburant (non représenté). En particulier, il s'agit ici d'une valve combinée de purge à limite de remplissage (CFLVV - « combined fill-limiting vent valve »). Le dispositif 1 de fixation comprend des moyens 5 de maintien de l'élément. Dans l'exemple représenté, les moyens 5 de maintien de l'élément sont un clip. Le dispositif 1 de fixation comprend également un corps 7 apte à être fixé sur le support 3. Le corps 7 est solidaire des moyens 5 de maintien de l'élément. Le corps 7 comprend une première partie 9 et une seconde partie 11. Elles sont solidaires et adjacentes entre elles. Elles sont déformables élastiquement. La première partie 9 présente une surface intérieure 9i concave et la seconde partie 11 présente une surface intérieure 11i concave. La première partie 9 s'étend dans un plan P9. La seconde partie 11 s'étend dans un plan P11. Les plans P9 et P11 sont différents. Ils sont transversaux l'un par rapport à l'autre. Dans le mode de réalisation représenté, les plans P9 et P11 sont orthogonaux. Le plan P9 de la première partie 9 est transversal à la surface intérieure 9i concave de la première partie 9, et le plan P11 de la seconde partie 11 est transversal à la surface intérieure 11i concave de la seconde partie 11. Plus précisément, le plan P9 de la première partie 9 est orthogonal à la surface intérieure 9i concave, et le plan P11 de la seconde partie 11 est orthogonal à la surface intérieure 11i concave de la seconde partie 11. Le dispositif 1 de fixation est constitué de sorte que la première partie 9 est apte à être positionnée sur une première zone 13 du support 3 dans une direction d'engagement D1 visible sur la figure 4a, située dans le plan P9 de la première partie 9, et à enserrer partiellement la première zone 13, et le positionnement de la première partie 9 sur la première zone 13 permet de positionner la seconde partie 11 par rapport à une seconde zone 15 du support 3, et la seconde partie 11 est apte à se déformer dans son plan P11 de manière à se conformer à la forme de la seconde zone 15 du support 3. Dans l'exemple représenté, on utilise donc une forme existante, à savoir une valve CFLW, pour fixer un élément à l'extérieur d'un réservoir à carburant.

L'ensemble du support 3 et du dispositif 1 de fixation forme un système 17 de fixation d'un élément.

Dans le mode de réalisation représenté, la première partie 9 est équipée de premières nervures de rigidification 19. Celles-ci sont situées dans des plans P19 représentés en figure 1a, parallèles au plan P9 défini par la première partie 9.

La seconde partie 11 du dispositif 1 de fixation comprend une extrémité 11a adjacente à la première partie 9, et une extrémité 11b opposée à cette dernière. A son extrémité 11b, la seconde partie 11 représentée sur les figures, comprend en outre un moyen 21 de calage de la seconde partie 11 du corps 7 contre la seconde zone 15, visible en particulier sur les figures 4. Dans ce mode de réalisation, le moyen 21 de calage est un ergot faisant saillie de la seconde partie 11.

Dans ce mode de réalisation, la seconde partie 11 comprend en outre à son extrémité 11b un deuxième moyen 23 de verrouillage de la seconde partie 11 dans sa position positionnée sur la seconde zone 15 du support 3. Le deuxième moyen 23 de verrouillage est complémentaire d'un moyen de verrouillage 25 de la seconde zone 15. Ces moyens de verrouillage 23, 25, sont visibles en particulier sur les figures 4. Dans le dispositif 1 de fixation représenté, le deuxième moyen 23 de verrouillage est un crochet capable de se fixer sur une nervure 25 présente sur la seconde zone 15. Dans l'exemple représenté, la nervure 25 est une nervure de repérage de la valve CFLVV 3. Sur un support cylindrique comme cette valve CFLVV, la mise en jeu du deuxième moyen 23 de verrouillage permet de raccourcir la longueur de la seconde partie 11. En effet, il suffit d'étendre la seconde partie 11 sur environ la moitié de la circonférence de la valve CFLVV 3 pour verrouiller le positionnement, comme visible sur les figures 4c et 1b.

Dans le mode de réalisation représenté, les moyens 5 de maintien de l'élément s'étendent à partir d'une portion 27 de la seconde partie 11, de façon à être déportés par rapport au support 3. Ceci permet d'accueillir l'élément dans un espace suffisant, à distance du support 3. Dans l'exemple représenté, la portion 27 comprend des secondes nervures de rigidification 29.

Comme visible en particulier sur la figure 2, la valve CFLVV 3 comprend une collerette 31, qui forme avec sa surface cylindrique un angle de 135°, conférant une forme particulière 33 à la surface de la seconde zone 15. Pour épouser cette forme 33, le côté 35 de la section des secondes nervures de rigidification 29 de la portion 27 de la seconde partie 11, présente un angle α. Dans l'exemple représenté, l'angle α est de 45°. Comme visible en particulier sur la figure 4a, le moyen 21 de calage de la seconde partie 11 peut présenter également un angle destiné à épouser la forme de la seconde zone 15.

La première partie 9 du dispositif 1 de fixation comprend une extrémité 9a adjacente à la seconde partie 11, et une extrémité 9b opposée à cette dernière. Comme visible en particulier à la figure 2, la première partie 9 comprend en outre à son extrémité 9b un premier moyen 37 apte à verrouiller la première partie 9 dans sa position positionnée sur la première zone 13. Dans l'exemple représenté, le premier moyen 37 de verrouillage est une dent destinée à être placée sous une surface du support 3, de manière à empêcher le retrait involontaire de la première partie 9. En effet, du fait de la forme 33 de la surface de la seconde zone (ici l'angle de 135° formé entre la collerette 31 et la surface cylindrique de la valve CFLVV 3), une force exercée dans la direction d'engagement / retrait de la première partie pourrait aboutir à l'ouverture du dispositif de fixation 1 (par retrait de la première partie 9). Une telle force pourrait être appliquée par exemple en cas de forte décélération du véhicule ou pendant le passage d'un dos d'âne. Le premier moyen 37 de verrouillage empêche l'ouverture du dispositif de fixation 1 dans ces conditions.

Dans une variante, la première partie 9, la seconde partie 11, et les moyens 5 de maintien de l'élément, sont à base du même matériau. Le dispositif 1 de fixation est par exemple fabriqué par injection d'un unique polymère tel que le POM (polyoxyméthylène), du polyamide, du polyéthylène, ou par mise en forme d'un métal sous forme pure ou alliée.

Comme visible en particulier sur la figure 3, les moyens de maintien comprennent un côté 39 destiné à interagir avec l'élément, et un côté 41 opposé à celui-ci. Sur le côté 41, les moyens 5 de maintien de l'élément comprennent au moins une nervure de contre-appui 43. La nervure de contre-appui 43 permet, lors de l'assemblage des moyens 5 de maintien avec l'élément, de chercher un contre-appui sur le support 3.

L'installation de l'élément dans le véhicule automobile, au moyen du système 17 de fixation, s'effectue de la manière suivante. Avant ou après le montage du corps 7 sur le support 3 du système de fixation 17, on assemble l'élément (non représenté) avec les moyens 5 de maintien de l'élément. On positionne la première partie 9 du corps 7 sur la première zone 13 du support 3, selon la direction d'engagement D1 de la première partie 9, et on enserre partiellement la première zone 13 par la première partie 9, comme visible en particulier sur la figure 4a. Puis, on positionne la seconde partie 11 du corps 7 sur la seconde zone 15 du support 3, par extension de la seconde partie 11 selon une direction D2 dans un plan P11 transversal à celui P9 dans lequel la direction d'engagement D1 de la première partie est située. De cette façon, la seconde partie 11 est positionnée sur la seconde zone 15, comme visible sur les figures 1b et 5c. Le cas échéant, le positionnement de la seconde partie 11 sur la seconde zone 15 est verrouillé grâce aux moyens de verrouillage 23 et 25. Le cas échéant également, la première partie 9 est verrouillée en position positionnée sur la première zone 13 grâce au premier moyen de verrouillage 37.

L'invention n'est pas limitée au mode de réalisation présenté et d'autres modes de réalisation apparaîtront clairement à l'homme du métier. Il est notamment possible que le support du système de fixation soit une autre partie d'un véhicule automobile, et en particulier une surface interne ou externe d'un réservoir automobile, et/ou un autre composant du réservoir destiné à être monté sur une desdites surfaces, ou un châssis ou cadre comprenant une pluralité de réservoirs à hydrogène. Il peut par exemple aussi s'agir d'un autre composant comme une pipette de dégazage. Les moyens de maintien de l'élément ne sont pas limités à un clip. Ils peuvent être tout moyen de maintien d'un élément connu de l'homme du métier.

## Revendications

1. Dispositif (1) de fixation d'un élément sur un support (3) formé par
une partie d'un véhicule automobile, préférentiellement par une surface interne ou externe d'un réservoir automobile, et/ou par un composant du réservoir destiné à être monté sur une desdites surfaces, ou un châssis ou cadre comprenant une pluralité de réservoirs à hydrogène, comprenant :
- des moyens (5) de maintien dudit élément, et
- un corps (7) apte à être fixé sur le support (3), le corps (7) étant solidaire des moyens (5) de maintien,
dans lequel :
- le corps (7) comprend une première (9) et une seconde (11) partie solidaires et adjacentes entre elles, et déformables élastiquement,
- les deux parties (9, 11) présentent chacune une surface intérieure (9i, 11i) concave,
- les deux parties (9, 11) s'étendent dans des plans (P9, P11) différents, transversaux l'un par rapport à l'autre,
de sorte que la première partie (9) est apte à être positionnée sur une première zone (13) du support (3) dans une direction d'engagement (D1) située dans le plan (P9) de la première partie (9), et à enserrer partiellement la première zone (13), de préférence apte à être clippée, et le positionnement, de préférence le clippage de la première partie (9) sur la première zone (13) du support (3), permet de positionner, de préférence clipper, la seconde partie (11) par rapport à une seconde zone (15) du support (3), la seconde partie (11) étant apte à se déformer dans le plan (P11) de la seconde partie (11) de manière à se conformer à la forme de la seconde zone (15) du support (3)
dans lequel la seconde partie (11) comprend en outre, à son extrémité (11b) opposée à son extrémité (11a) adjacente à la première partie (9), un deuxième moyen (23) de verrouillage complémentaire d'un moyen de verrouillage (25) de la seconde zone (15), pour verrouiller la seconde partie (11) dans sa position positionnée sur la seconde zone (15), et
le deuxième moyen (23) de verrouillage est un crochet capable de se fixer sur une nervure (25) présente sur la seconde zone (15)..

2. Dispositif (1) de fixation selon la revendication précédente, dans lequel la première partie (9) est équipée de premières nervures de rigidification (19), de préférence situées dans des plans (P19) parallèles au plan (P9) défini par la première partie (9).

3. Dispositif (1) de fixation selon l'une quelconque des revendications précédentes, dans lequel la seconde partie (11) comprend en outre, à son extrémité (11b) opposée à son extrémité (11a) adjacente à la première partie (9), un moyen (21) de calage apte à caler la seconde partie (11) du corps (7) contre la seconde zone (15).

4. Dispositif (1) de fixation selon l'une quelconque des revendications précédentes, dans lequel les moyens (5) de maintien de l'élément s'étendent à partir d'une portion (27) de la seconde partie (11), de façon à être déportés par rapport au support (3).

5. Dispositif (1) de fixation selon la revendication précédente, ladite portion (27) comprenant des secondes nervures de rigidification (29).

6. Dispositif (1) de fixation selon la revendication précédente, la section des secondes nervures de rigidification (29) présentant, du côté (35) destiné à être positionné sur la seconde zone (15), un angle (α) destiné à épouser une forme (33) de la surface de la seconde zone (15).

7. Dispositif (1) de fixation selon la revendication précédente, dans lequel la première partie (9) comprend en outre, à son extrémité (9b) opposée à son extrémité (9a) adjacente à la seconde partie (11), un premier moyen (37) apte à verrouiller la première partie (9) dans sa position positionnée, de préférence clippée.

8. Dispositif (1) de fixation selon l'une quelconque des revendications précédentes, dans lequel les première (9) et seconde (11) parties, et les moyens (5) de maintien de l'élément, sont à base du même matériau.

9. Dispositif (1) de fixation selon l'une quelconque des revendications précédentes, dans lequel les moyens (5) de maintien de l'élément comprennent, sur un côté (41) opposé à un côté (39) destiné à interagir avec l'élément, au moins une nervure de contre-appui (43).

10. Dispositif (1) de fixation selon l'une quelconque des revendications précédentes, apte à être fixé sur un support (3) formé par une surface interne ou externe d'un réservoir automobile, et/ou un composant du réservoir destiné à être monté sur une desdites surfaces, ou un châssis ou cadre comprenant une pluralité de réservoirs à hydrogène.

11. Système (17) de fixation d'un élément à un véhicule automobile, ledit système (17) comprenant
- un support (3) formé par une partie du véhicule automobile, préférentiellement par une surface interne ou externe d'un réservoir automobile, et/ou par un composant du réservoir destiné à être monté sur une desdites surfaces, ou un châssis ou cadre comprenant une pluralité de réservoirs à hydrogène,
- un dispositif (1) de fixation selon l'une quelconque des revendications 1 à 10.

12. Système (17) de fixation selon la revendication précédente, dans lequel la partie (3) de véhicule automobile est une surface interne ou externe d'un réservoir automobile, et/ou un composant du réservoir destiné à être monté sur une desdites surfaces, ou un châssis ou cadre comprenant une pluralité de réservoirs à hydrogène.

13. Système (17) de fixation selon l'une quelconque des revendications 11 à 12, dans lequel le support (3) est une valve de purge à limite de remplissage (FLVV, « fill limiting vent valve »), ou une valve combinée (CFLVV), ou bien une pipette de dégazage.

14. Partie (3) d'un véhicule automobile, sur ou à l'intérieur de laquelle un élément est fixé par un système (17) de fixation selon l'une quelconque des revendications 11 à 13.

15. Partie (3) d'un véhicule selon la revendication précédente, consistant en une surface interne ou externe d'un réservoir automobile, et/ou un composant du réservoir destiné à être monté sur une desdites surfaces, ou un châssis ou cadre comprenant une pluralité de réservoirs à hydrogène.

16. Procédé d'installation d'un élément dans un véhicule automobile, l'installation étant effectuée au moyen d'un système (17) de fixation selon l'une quelconque des revendications 11 à 13, comprenant les étapes suivantes :
- avant ou après le montage du corps (7) sur le support (3) du système (17) de fixation, on assemble l'élément avec les moyens (5) de maintien,
- on positionne la première partie (9) du corps (7) sur une première zone (13) du support (3), selon une direction d'engagement (D1) de la première partie (9), et on enserre partiellement la première zone (13) par la première partie (9), préférentiellement on clippe,
- on positionne la seconde partie (11) du corps (7) sur la seconde zone (15) du support (3), par extension de la seconde partie (11) selon une direction (D2) dans un plan (P11) transversal à celui (P9) dans lequel la direction d'engagement (D1) de la première partie est située, préférentiellement on clippe .

17. Procédé d'installation selon la revendication précédente, dans lequel l'étape de positionnement de la première partie (9) du corps (7) précède l'étape de positionnement de la seconde partie (11) du corps (7) sur la seconde zone (15) du support (3).

## Patentansprüche

1. Befestigungsvorrichtung (1) zum Befestigen eines Elements auf einem Träger (3), der von einem Teil eines Kraftfahrzeugs, vorzugsweise von einer inneren oder äußeren Oberfläche eines Kraftfahrzeugtanks, und/oder von einer Komponente des Tanks, die dazu bestimmt ist, auf einer der Oberflächen montiert zu werden, oder einem mehrere Wasserstofftanks umfassenden Gestell oder Rahmen gebildet ist, umfassend:
- Haltemittel (5) zum Halten des Elements und
- einen Körper (7), der auf dem Träger (3) befestigbar ist, wobei der Körper (7) mit den Haltemitteln (5) fest verbunden ist,
wobei:
- der Körper (7) einen ersten Teil (9) und einen zweiten Teil (11) umfasst, die miteinander fest verbunden und einander benachbart und elastisch verformbar sind,
- die zwei Teile (9, 11) jeweils eine konkave innere Fläche (9i, 11i) aufweisen,
- die zwei Teile (9, 11) sich in unterschiedlichen, quer zueinander liegenden Ebenen (P9, P11) erstrecken,
derart, dass das erste Teil (9) imstande ist, auf einer ersten Zone (13) des Trägers (3) in einer in der Ebene (P9) befindlichen Eingriffsrichtung (D1) des ersten Teils (9) angeordnet zu werden und die erste Zone (13) teilweise zu umfassen, bevorzugt zu verrasten, und das Anordnen, bevorzugt das Verrasten des ersten Teils (9) auf der ersten Zone (13) des Trägers (3), gestattet, den zweiten Teil (11) relativ zu einer zweiten Zone (15) des Trägers (3) anzuordnen, bevorzugt zu verrasten, wobei der zweite Teil (11) imstande ist, sich in der Ebene (P11) des zweiten Teils (11) so zu verformen, dass er sich an die Form der zweiten Zone (15) des Trägers (3) anpasst,
wobei der zweite Teil (11) ferner, an seinem Ende (11b), das seinem dem ersten Teil (9) benachbarten Ende (11a) gegenüberliegt, ein zu einem Verriegelungsmittel (25) der zweiten Zone (15) komplementäres zweites Verriegelungsmittel (23) umfasst, um den zweiten Teil (11) in seiner auf der zweiten Zone (15) angeordneten Position zu verriegeln, und
das zweite Verriegelungsmittel (23) ein Haken ist, der auf einer Rippe (25), die auf der zweiten Zone (15) vorhanden ist, befestigbar ist.

2. Befestigungsvorrichtung (1) nach dem vorhergehenden Anspruch, wobei der erste Teil (9) mit ersten Versteifungsrippen (19) versehen ist, die sich bevorzugt in Ebenen (P19) befinden, die zu der Ebene (P9), die von dem ersten Teil (9) definiert wird, parallel sind.

3. Befestigungsvorrichtung (1) nach einem der vorhergehenden Ansprüche, wobei der zweite Teil (11) ferner, an seinem Ende (11b), das seinem dem ersten Teil (9) benachbarten Ende (11a) gegenüberliegt, ein Verkeilungsmittel (21) umfasst, das imstande ist, den zweiten Teil (11) des Körpers (7) gegen die zweite Zone (15) zu verkeilen.

4. Befestigungsvorrichtung (1) nach einem der vorhergehenden Ansprüche, wobei die Haltemittel (5) zum Halten des Elements sich von einem Abschnitt (27) des zweiten Teils (11) aus so erstrecken, dass sie relativ zu dem Träger (3) verlagert sind.

5. Befestigungsvorrichtung (1) nach dem vorhergehenden Anspruch, wobei der Abschnitt (27) zweite Versteifungsrippen (29) umfasst.

6. Befestigungsvorrichtung (1) nach dem vorhergehenden Anspruch, wobei der Querschnitt der zweiten Versteifungsrippen (29), auf der Seite (35), die dazu bestimmt ist, auf der zweiten Zone (15) angeordnet zu werden, einen Winkel (α) aufweist, der dazu bestimmt ist, sich an eine Form (33) der Oberfläche der zweiten Zone (15) anzuschmiegen.

7. Befestigungsvorrichtung (1) nach dem vorhergehenden Anspruch, wobei der erste Teil (9) ferner, an seinem Ende (9b), das seinem dem zweiten Teil (11) benachbarten Ende (9a) gegenüberliegt, ein erstes Mittel (37) umfasst, das imstande ist, den ersten Teil (9) in seiner angeordneten, bevorzugt verrasteten, Position, zu verriegeln.

8. Befestigungsvorrichtung (1) nach einem der vorhergehenden Ansprüche, wobei der erste Teil (9) und der zweite Teil (11) und die Haltemittel (5) zum Halten des Elements auf der Basis des gleichen Materials sind.

9. Befestigungsvorrichtung (1) nach einem der vorhergehenden Ansprüche, wobei die Haltemittel (5) zum Halten des Elements, auf einer Seite (41), die einer Seite (39), die zum Zusammenwirken mit dem Element bestimmt ist, gegenüberliegt, mindestens eine Widerlagerrippe (43) umfassen.

10. Befestigungsvorrichtung (1) nach einem der vorhergehenden Ansprüche, die auf einem Träger (3) befestigbar ist, der von einer inneren oder äußeren Oberfläche eines Kraftfahrzeugtanks, und/oder einer Komponente des Tanks, die dazu bestimmt ist, auf einer der Oberflächen montiert zu werden, oder einem mehrere Wasserstofftanks umfassenden Gestell oder Rahmen gebildet ist.

11. System (17) zum Befestigen eines Elements an einem Kraftfahrzeug, wobei das System (17) umfasst
- einen Träger (3), der von einem Teil eines Kraftfahrzeugs, vorzugsweise von einer inneren oder äußeren Oberfläche eines Kraftfahrzeugtanks, und/oder von einer Komponente des Tanks, die dazu bestimmt ist, auf einer der Oberflächen montiert zu werden, oder einem mehrere Wasserstofftanks umfassenden Gestell oder Rahmen gebildet ist,
- eine Befestigungsvorrichtung (1) nach einem der Ansprüche 1 bis 10.

12. Befestigungssystem (17) nach dem vorhergehenden Anspruch, wobei das Teil (3) eines Kraftfahrzeugs eine innere oder äußere Oberfläche eines Kraftfahrzeugtanks, und/oder eine Komponente des Tanks, die dazu bestimmt ist, auf einer der Oberflächen montiert zu werden, oder ein mehrere Wasserstofftanks umfassendes Gestell oder umfassender Rahmen ist.

13. Befestigungssystem (17) nach einem der Ansprüche 11 bis 12, wobei der Träger (3) ein Entlüftungsventil mit Füllbegrenzung (FLW, fill limiting vent valve) oder ein kombiniertes Ventil (CFLVV) oder eine Entlüftungspipette ist.

14. Teil (3) eines Kraftfahrzeugs, auf oder in dem ein Element durch ein Befestigungssystem (17) nach einem der Ansprüche 11 bis 13 befestigt ist.

15. Teil (3) eines Kraftfahrzeugs, nach dem vorhergehenden Anspruch, bestehend aus einer inneren oder äußeren Oberfläche eines Kraftfahrzeugtanks, und/oder einer Komponente des Tanks, die dazu bestimmt ist, auf einer der Oberflächen montiert zu werden, oder einem mehrere Wasserstofftanks umfassenden Gestell oder Rahmen.

16. Verfahren zum Installieren eines Elements in einem Kraftfahrzeug, wobei die Installation unter Verwendung eines Befestigungssystems (17) nach einem der Ansprüche 11 bis 13 erfolgt, umfassend die folgenden Schritte:
- vor oder nach dem Montieren des Körpers (7) auf dem Träger (3) des Befestigungssystems (17), Zusammenfügen des Elements mit den Haltemitteln (5),
- Anordnen des ersten Teils (9) des Körpers (7) auf einer ersten Zone (13) des Trägers (3), gemäß einer Eingriffsrichtung (D1) des ersten Teils (9), und teilweises Umfassen der ersten Zone (13) durch den ersten Teil (9), vorzugsweise Verrasten,
- Anordnen des zweiten Teils (11) des Körpers (7) auf der zweiten Zone (15) des Trägers (3), durch Ausdehnen des zweiten Teils (11) in einer Richtung (D2) in einer zu der Ebene (P9) querliegenden Ebene (P11), in der sich die Eingriffsrichtung (D1) des ersten Teils (9) befindet, vorzugsweise Verrasten.

17. Installationsverfahren nach dem vorhergehenden Anspruch, wobei der Schritt des Anordnens des ersten Teils (9) des Körpers (7) dem Schritt des Anordnens des zweiten Teils (11) des Körpers (7) auf der zweiten Zone (15) des Trägers (3) vorausgeht.

## Claims

1. A device (1) for attaching an element to a support (3) formed by a part of a motor vehicle, preferentially by an inner or outer surface of a motor vehicle tank, and/or by a component of the tank intended to be mounted on one of said surfaces, or a chassis or frame comprising a plurality of hydrogen tanks, comprising:
- means (5) for retaining said element, and
- a body (7) capable of being attached to the support (3), the body (7) being rigidly attached to the retaining means (5),
wherein:
- the body (7) comprises a first part (9) and a second part (11) which are rigidly attached, adjacent to one another and elastically deformable,
- the two parts (9, 11) each have a concave inner surface (9i, 11i),
- the two parts (9, 11) extend in different planes (P9, P11), transverse relative to each other,
such that the first part (9) is capable of being positioned on a first area (13) of the support (3) in an engagement direction (D1) located in the plane (P9) of the first part (9), and for partially enclosing the first area (13), preferably capable of being clipped, and the positioning, preferably the clipping of the first part (9) to the first area (13) of the support (3), makes it possible to position, preferably to clip, the second part (11) relative to a second area (15) of the support (3), the second part (11) being capable of deforming in the plane (P11) of the second part (11) so as to conform to the shape of the second area (15) of the support (3)
wherein the second part (11) further comprises, at its end (11b) opposite its end (11a) adjacent to the first part (9), a second locking means (23) complementary to a locking means (25) of the second area (15), for locking the second part (11) in its position positioned on the second area (15), and
the second locking means (23) is a hook capable of being attached on a rib (25) provided on the second area (15).

2. The attachment device (1) according to the preceding claim, wherein the first part (9) is equipped with first stiffening ribs (19), preferably located in planes (P19) parallel to the plane (P9) defined by the first part (9).

3. The attachment device (1) according to any one of the preceding claims, wherein the second part (11) further comprises, at its end (11b) opposite its end (11a) adjacent to the first part (9), a wedging means (21) capable of wedging the second part (11) of the body (7) against the second area (15).

4. The attachment device (1) according to any one of the preceding claims, wherein the means (5) for retaining the element extend from a portion (27) of the second part (11), so as to be offset relative to the support (3).

5. The attachment device (1) according to the preceding claim, wherein said portion (27) comprises second stiffening ribs (29).

6. The attachment device (1) according to the preceding claim, wherein the section of the second stiffening ribs (29) has, on the side (35) intended to be positioned on the second area (15), an angle (α) intended to match a shape (33) of the surface of the second area (15).

7. The attachment device (1) according to the preceding claim, wherein the first part (9) further comprises, at its end (9b) opposite its end (9a) adjacent to the second part (11), a first means (37) capable of locking the first part (9) in its positioned position, preferably clipped.

8. The attachment device (1) according to any one of the preceding claims, wherein the first part (9) and the second part (11), and the means (5) for retaining the element, are based on the same material.

9. The attachment device (1) according to any one of the preceding claims, wherein the means (5) for retaining the element comprise, on one side (41) opposite a side (39) intended to interact with the element, at least one counterbearing rib (43).

10. The attachment device (1) according to any one of the preceding claims, capable of being attached to a support (3) formed by an inner or outer surface of a motor vehicle tank, and/or a component of the tank intended to be mounted on one of said surfaces, or a chassis or frame comprising a plurality of hydrogen tanks.

11. A system (17) for attaching an element to a motor vehicle, said system (17) comprising
- a support (3) formed by a part of the motor vehicle, preferentially by an inner or outer surface of a motor vehicle tank, and/or by a component of the tank intended to be mounted on one of said surfaces, or a chassis or frame comprising a plurality of hydrogen tanks,
- an attachment device (1) according to any one of claims 1 to 10.

12. The attachment system (17) according to the preceding claim, wherein the motor vehicle part (3) is an inner or outer surface of a motor vehicle tank, and/or a component of the tank intended to be mounted on one of said surfaces, or a chassis or frame comprising a plurality of hydrogen tanks.

13. The attachment system (17) according to any one of claims 11 to 12, wherein the support (3) is a fill limiting vent valve (FLVV), or a combined valve (CFLVV), or else a degassing pipette.

14. A part (3) of a motor vehicle, on or inside which an element is attached by an attachment system (17) according to any one of claims 11 to 13.

15. The part (3) of a vehicle according to the preceding claim, consisting of an inner or outer surface of a motor vehicle tank, and/or a component of the tank intended to be mounted on one of said surfaces, or a chassis or frame comprising a plurality of hydrogen tanks.

16. A method for installing an element in a motor vehicle, the installation being carried out by means of an attachment system (17) according to any one of claims 11 to 13, comprising the following steps:
- before or after the mounting of the body (7) on the support (3) of the attachment system (17), the element is assembled with the retaining means (5),
- the first part (9) of the body (7) is positioned on a first area (13) of the support (3), in an engagement direction (D1) of the first part (9), and the first area (13) is partially enclosed by the first part (9), preferentially clipped,
- the second part (11) of the body (7) is positioned on the second area (15) of the support (3), by extending the second part (11) in a direction (D2) in a plane (P11) transverse to the plane (P9) wherein the engagement direction (D1) of the first part is located, preferentially clipped.

17. The installation method according to the preceding claim, wherein the step of positioning the first part (9) of the body (7) precedes the step of positioning the second part (11) of the body (7) on the second area (15) of the support (3).
